# EUROPÄISCHE PATENTSCHRIFT

(11) **EP 1 550 861 B1**
(45) Veröffentlichungstag und Bekanntmachung des Hinweises auf die Patenterteilung: **18.04.2007**
(21) Anmeldenummer: 03104932.3
(22) Anmeldetag: 23.12.2003
(51) Int. Cl.: G01N 27/416, G01N 27/403, G01N 27/417

(54) **Verfahren und Vorrichtung zur Bestimmung des Zustandes einer Messsonde**
Method and device for determining of the status of a probe
Procédé et appareil pour déterminer l'état d'un capteur

(43) Veröffentlichungstag der Anmeldung: 06.07.2005
(73) Patentinhaber: Mettler-Toledo AG, 8606 Greifensee (CH)
(72) Erfinder: Ammann, Juergen, 8004, Zürich (CH); Peer, Alfred, 6330, Cham (CH); Oberlin, René, 5436, Würrenlos (CH); Anders, Klaus-Dieter, 5452, Oberrohrdorf (CH); Zwicky, Christian, 8044, Gockhausen (CH)

(56) Entgegenhaltungen:
- US-A- 4 652 451
- US-B1- 6 173 600
- METTLER-TOLEDO: "The new O2 range of sensors" PHARMACEUTICAL NEWS, [Online] Bd. 1, Januar 2003 (2003-01), Seiten 1-8, XP002274928 Gefunden im Internet: <URL:http://www.elscolab.com> [gefunden am 2004-03-25]
- "pH electrode with integral temperature sensor" ENGINEERINGTALK, [Online] XP002274929 Gefunden im Internet: <URL:http://www.engineeringtalk.com/news/m ee/mee107.htm> [gefunden am 2004-03-25]
- "Self-cleaning sensor in pH control" ENGINEERINGTALK, [Online] XP002274930 Gefunden im Internet: <URL:http:77www.engineeringtalk.com/news/m ee/mee116.htm> [gefunden am 2004-03-25]

## Beschreibung

Die Erfindung betrifft ein Verfahren zur Bestimmung des Zustands einer Messsonde nach dem Oberbegriff des Patentanspruchs 1 sowie eine Messsonde und eine ein- oder mehrstufige Anlage, welche die Anwendung dieses Verfahrens erlauben.

Die Kontrolle industrieller Prozesse, beispielsweise in der chemischen und pharmazeutischen Industrie, in der Textilindustrie, in der Lebensmittel- und Getränkeindustrie, bei der Papier- und Zellstoffverarbeitung oder bei der Wasseraufbereitung und Abwasserbehandlung basiert auf der Messung von Prozessgrössen, die anhand von entsprechenden Messsonden bzw. Sensoren ermittelt werden.

In [1], Prozessanalytische Systemlösungen für die Brauerei, Firmenschrift der Mettler-Toledo GmbH, CH-8902 Urdorf, Art. Nr. 52 900 309, Druckdatum 09/2003, ist beschrieben, dass, mittels entsprechender Messsonden, in einzelnen Stufen der Prozesskette einer Brauerei (gebildet durch die Wasseraufbereitung; das Sudhaus; den Gär- und Lagerkeller; die Filtration, Karbonisierung und Abfüllung; sowie die Abwasserbehandlung) die Leitfähigkeit, der gelöste Sauerstoff, der pH-Wert, der CO₂-Wert und die Trübung des Prozessguts gemessen werden.

Die von den Messsonden abgegebenen Signale werden über Messumformer (auch Transmitter genannt), gegebenenfalls Koppler und einen gemeinsamen Datenbus einem Prozess- oder Leitrechner zugeführt, der die Messsignale verarbeitet und den Prozess steuert.

Zu beachten ist, dass bei hohem Automatisierungsgrad in der Lebensmittel- und Biotechnologie meist weitgehend geschlossene und fest verrohrte Produktionsanlagen vorliegen, in denen zahlreiche Messsonden eingesetzt sind. Schlecht desinfizierte und sterilisierte Oberflächen bergen hygienische Risiken in sich. Unerwünschte Mikroorganismen können sich in Ablagerungen gut vermehren, da sie dort ideale Wachstumsbedingungen in Form von Nährstoffen und geeigneter Temperatur vorfinden. Zudem sind Mikroorganismen in Ablagerungen schwieriger zu inaktivieren. Vollständig gereinigte Oberflächen sind somit die Grundvoraussetzung für die Desinfektions- und Sterilisationsfähigkeit einer Anlage. Die Anlagenreinigung ist daher zu einem komplexen Prozess und deren technische Ausführung zu einer anspruchsvollen Aufgabe geworden (siehe [2], Dr.-Ing. Karl Welchner, Oberstes Gebot, Reproduzierbare Anlagenreinigung als zentrales Qualitätskriterium (Teil 1) Pharma + Food 2/2000).

Von besonderer Bedeutung für die einwandfreie Prozessführung ist ferner die Überwachung des Zustands der einzelnen Messsonden, deren Eigenschaften sich nach längerer Betriebsdauer normalerweise ändern.

In [3], DE 102 09 318 A1 ist beschrieben, dass sich der Verschleiss einer Messsonde in der Veränderung eines oder mehrerer für seine Funktion relevanter Parameter äussert. Als Parameter zur Bestimmung der verschleissabhängigen Reststandzeit werden die Kalibrierparameter einer pH- oder Sauerstoffmesssonde vorgeschlagen, namentlich der Nullpunkt, die Steigung, die Impedanz und die Einstellzeit.

In [4], DE 101 00 239 A1 ist ein Verfahren zur Bestimmung der Restbetriebsdauer einer potentiometrischen Messsonde beschrieben, die einen Elektrolyten sowie ein primäres und ein sekundäres Bezugselement aufweist, welche derart angeordnet sind, dass eine von einer Öffnung der Messsonde ausgehende, fortschreitende Verarmung des Elektrolyten mittels des sekundären Bezugselements erfasst werden kann, bevor die Verarmung des Elektrolyten das primäre Bezugselement erreicht, an dem ein zu messendes Potential anliegt. Nachdem die zwischen dem primären und sekundären Bezugselement gemessene Potentialdifferenz einen vorgegebenen Grenzwert überschritten hat, kann die Restbetriebsdauer ermittelt und angezeigt werden.

In [4] ist ferner beschrieben, dass an Messsonden, die für die Überwachung chemischer oder mikrobiologischer Prozesse eingesetzt werden, Verschmutzungen auftreten können, die zu einer Verfälschung des Messergebnisses führen können. Verschmutzungen sind daher nicht nur in der Anlage oder einzelnen Komponenten derselben, sondern auch an den Messsonden zu beseitigen, um korrekte Messergebnisse und gleichzeitig den hygienisch einwandfreien Zustand der Anlage zu gewährleisten. Aufgrund der hohen Anzahl verwendeter Messsonden werden diese normalerweise nicht ausgebaut und gereinigt, sondern in einem CIP-(Cleaning In Place) oder SIP-(Sterilizing In Place) Verfahren gereinigt bzw. sterilisiert. Mit den CIP-Prozessen wird jeglichem Bakterienwachstum vorgebeugt und die Rohrleitung nach Prozessende von Schmutzpartikeln befreit. Dabei wird eine Reinigungs/Desinfektionslösung oder auch nur heisses Wasser durch das Rohrleitungssystem gepumpt.

CIP-taugliche Messsonden; Leitfähigkeitssensoren, pH-Sensoren, O₂-Sensoren, CO₂-Sensoren und Trübungssensoren; sowie entsprechende Armaturen und Prozessanschlüsse sind aus [1] bekannt. In [1] sind ferner Steuermodule (EasyClean) gezeigt, mit denen automatisierte Reinigungs- und Kalibriersysteme realisierbar sind.

Zur Bestimmung der Kalibrier-Intervallzeit von elektrochemischen Messsonden kann beispielsweise ein Verfahren angewendet werden, wie es in [5], DE 101 41 408 A1 beschrieben ist. Dabei wird eine Basis-Intervallzeit für einen definierten Basis-Wertebereich mindestens eines für die Anpassung der Kalibrier-Intervallzeit relevanten Messparameters eines zu messenden Mediums vorgegeben, der während des Betriebs der Messsonde erfasst wird. Anschliessend wird die Abweichung der erfassten Messparameter-Werte von dem definierten Basis-Wertebereich ermittelt und die Kalibrier-Intervallzeit in Abhängigkeit der ermittelten Abweichung angepasst.

Gemäss [3] und [4] wird daher der Zustand der Messsonden anhand von Veränderungen der Eigenschaften dieser Messsonden bestimmt. In [5] wird die Bestimmung der Intervalle gelehrt, innerhalb derer die Messsonden neu zu kalibrieren sind, um aufgetretene Veränderungen zu kompensieren.

Wie oben beschrieben, sind diese Verfahren mit erheblichem Aufwand verbunden und erfordern gegebenenfalls entsprechende Ausgestaltungen der Messsonden.

Bekannt ist ferner, dass Messsonden nach einer bestimmten Anzahl von CIP- oder SIP-Prozessen ausgewechselt werden sollten.

Aus [6], Jochen Endress, Non-Stopp im Einsatz, Pharma + Food 1/2002, Seite 36, ist bekannt, dass sich die CIP-Standzeiten einzelner Messsonden unterscheiden. Möglich ist ferner, dass CIP- oder SIP-Prozesse nicht in allen Teilen einer Anlage durchgeführt werden. Weiterhin ist es möglich, dass sich die CIP- oder SIP-Prozesse in den einzelnen Anlagenbereichen beispielsweise hinsichtlich der angewendeten Temperatur unterscheiden, wodurch unterschiedliche Belastungen entstehen. Möglich ist ferner, dass in einer Prozessstufe sequentiell verschiedene Reinigungsprozesse durchgeführt werden. Beispielsweise wird jeweils nach n CIP-Prozessen ein SIP-Prozess durchgeführt. Die Verwaltung der Messsonden einer gesamten Prozessanlage, unter Berücksichtigung aller Variationsmöglichkeiten der ablaufenden Prozesse, insbesondere der CIP- und SIP-Prozesse gestaltet sich daher sehr aufwändig.

Variationsmoglichkeiten der ablaufenden Prozesse, insbesondere der CIP- und SIP-Prozesse gestaltet sich daher sehr aufwändig. Das pauschale Zählen, der initiierten CIP- und SIP-Prozesse führt daher zu Informationen, welche den Zustand der in der Anlage eingesetzten Messsonden nicht präzise repräsentieren.

In [11] werden Sauerstoffsensoren beschrieben, bein denen auch ein Temperatursensor vorhanden ist. Die Sauerstoffsensoren werden CIP-bzw SIP-Verfahren ausgesetzt. Auch während der Reinigungsverfahren ist es möglich, die Temperatur zu messen.

Der vorliegenden Erfindung liegt daher die Aufgage zugrunde, ein verbessertes Verfahren zur Bestimmung des Zustands einer in einem Behältnis integrierten Messsonde anzugeben, die, ohne diese auszubauen, von Zeit zu Zeit, insbesondere unter Anwendung bekannter CIP- oder SIP-Verfahren, gereinigt wird. Ferner sind eine Messsonde sowie eine aus dem mit der Messsonde versehenen Behältnis und einer Mess- und/oder Steuervorrichtung bestehende Anlage anzugeben, welche die Anwendung des erfindungsgemässen Verfahrens erlauben.

Unter einem Behältnis sei hier eine Vorrichtung verstanden, in welcher eine oder mehrere Messsonden eingebaut werden können; beispielsweise kann es sich dabei um einen Mischkessel, einen Fermenter, einen Reaktor oder ein Durchflussrohr eines Leitungssystems oder um eine weitere zum Einbau einer Messsonde geeignete Einrichtung handeln, wie beispielsweise aus [1] hervorgeht.

Insbesondere ist ein einfach durchführbares Verfahren anzugeben, welches für jede in Behältnis bzw. in der Anlage, installierte Messsonde präzise Zustandsinformationen liefert.

Diese Aufgabe wird mit einem Verfahren und einer Anlage gelöst, welche die in Anspruch 1 und 8 angegebenen Merkmale aufweisen. Vorteilhafte Ausgestaltungen der Erfindung sind in weiteren Ansprüchen angegeben.

Das Verfahren dient der Bestimmung des Zustands wenigstens einer in einem Behältnis integrierten Messsonde, die, ohne diese auszubauen, von Zeit zu Zeit, insbesondere unter Anwendung bekannter CIP- oder SIP-Verfahren, gereinigt wird. Das Verfahren ist in beliebigen mit einem Behältnis und Messsonden versehenen grossen und kleinen Anlagen, beispielsweise auch einem Fermenter oder Reaktor, durchführbar.

Erfindungsgemäss wird die Temperatur der Messsonde oder des die Messsonde umgebenden, gegebenenfalls umfliessenden, Mediums mittels eines innerhalb der Messsonde oder innerhalb des Behältnisses vorgesehenen Messfühlers gemessen und anhand des während des Einsatzes der Messsonde registrierten Verlaufs der gemessenen Temperatur der Zustand der Messsonde bestimmt.

Vorzugsweise wird die Temperatur mit wenigstens einem Schwellwert verglichen und nach Überschreiten dieses Schwellwerts wird:
a) eine entsprechende Belastung registriert;
b) eine entsprechende Belastung registriert und die Summe aller Belastungen ermittelt;
c) eine entsprechende Belastung registriert und die Summe aller Belastungen ermittelt und durch Vergleich mit einem Maximalwert der zulässigen Belastungen eine zulässige Restbelastung oder Restlebensdauer berechnet.

Beispielsweise wird nach Feststellung einer Belastung die registrierte Restlebensdauer der Messsonde entsprechend reduziert. Die zulässige Restbelastung oder Restlebensdauer entspricht beispielsweise der Anzahl noch zulässiger CIP- oder SIP-Prozesse. Sofern jedoch die CIP- oder SIP-Prozesse zeitlich fest geplant sind, kann der Zeitpunkt bzw. das Datum ermittelt werden, an dem die Messsonde ausgetauscht oder neu kalibriert werden muss.

Das erfindungsgemässe Verfahren erlaubt daher die zulässige Restbelastung oder Restlebensdauer bis zum Austausch, bis zu einer Wartung und/oder bis zu einer Neukalibrierung aller in einer komplexen Anlage vorgesehenen Messsonden individuell zu bestimmen, indem die tatsächlich auf die Messsonden einwirkenden Einflüsse mit geringem Aufwand erfasst, registriert und verarbeitet werden.

Dabei können CIP- oder SIP-Prozesse oder auch belastende Prozesse zur Bearbeitung eines Prozessguts berücksichtigt werden. Aufwendungen für die Analyse bestimmter Parameter der Messsonde entfallen bei der Anwendung dieses Verfahrens ebenso, wie die Verwendung zusätzlicher Messsondenelemente wie Sekundärelektroden. Ferner ist die Belastung der betroffenen Messsonden nicht mehr aus den von der Prozesssteuerung gegebenenfalls lokal eingeleiteten Prozessen und deren Parametern zu berechnen, was mit erheblichem Aufwand und zahlreichen Fehlermöglichkeiten verbunden wäre. Anstatt die Lebensdauer der Messsonden anhand der auf Prozessleitebene eingeleiteten Prozesse zu berechnen, wird die Lebensdauer der Messsonden anhand der tatsächlich auftretender Einwirkungen ermittelt.

Durch die Verwendung von Schwellwerten können eingeleitete Prozesse identifiziert und entsprechende Belastungen bei der individuellen Berechnung der zulässigen Restbelastung oder Restlebensdauer jeder Messsonde berücksichtigt werden. Die Werte für die in den CIP - und SIP-Prozessen verwendeten Drücke und Temperaturen sind sehr unterschiedlich und hängen vom jeweiligen Anwendungsbereich ab. Im Bereich der Milchverarbeitung liegen die CIP-Temperaturen beispielsweise bei ca. 80°C. Bei SIP-Prozessen kommt es darauf an, ob mit oder ohne Desinfektionsmittel gearbeitet wird. Beispielsweise wird für SIP-Prozesse eine um cirka 20°C höhere Temperatur gewählt, als bei CIP-Prozessen. In der Biotechnologie werden SIP-Prozesse beispielsweise bei 120°C gefahren; SIP-Prozesse der Lebensmittelindustrie hingegen bei ca. 95°C.

Durch die Verwendung von zwei entsprechenden Schwellwerten lassen sich gegebenenfalls sequentiell ablaufende CIP- und SIP-Prozesse unterscheiden und entsprechend unterschiedliche Änderungen der Restlebensdauer bzw. der zulässigen Restbelastung berechnen. Dabei kann für jeden detektierten Prozess eine entsprechende Reduktion der Restlebensdauer bzw. der zulässigen Restbelastung einer Messsonde registriert werden.

In vorzugsweisen Ausgestaltungen wird der Verlauf der gemessenen Temperatur gesamthaft oder nur nach Überschreiten eines Schwellwerts integriert. Sofern der gesamte Temperaturverlauf berücksichtigt wird, lassen sich beispielsweise nebst Reinigungsprozessen auch weitere Prozesse bei der Berechnung der Restlebensdauer bzw. der zulässigen Restbelastung berücksichtigen. Die Restlebensdauer bzw. die zulässige Restbelastung kann anschliessend durch Bildung der Differenz zwischen dem der Gesamtbelastung entsprechenden Integralwert und einem der Messsonde zugehörigen Maximalwert ermittelt werden. Die Restlebensdauer bzw. die zulässige Restbelastung der überwachten Messsonden kann an einer zentralen oder dezentralen Anzeigevorrichtung der Anlage ebenso angezeigt werden, wie das Überschreiten des Maximalwerts. Selbstverständlich können auch für Produktionsprozesse entsprechende Schwellwerte und Belastungen bzw. Änderungen der Restlebensdauer bzw. der zulässigen Restbelastung vorgesehen werden.

In einer vorzugsweisen Ausgestaltung weisen die Messsonden ein Speichermodul auf, beispielsweise ein EEPROM (Electrically Erasable Programmable Read Only Memory), in dem der Zustand der Messsonde; insbesondere die Restlebensdauer bzw. die zulässige Restbelastung und/oder der zu den aufgetretenen Einwirkungen korrespondierende Integralwert, und/oder der der Messsonde zugeordnete zulässige Maximalwert der Einwirkungen speicherbar ist. Möglich ist die Speicherung weiterer vorzugsweisen Ausgestaltungen kann auch der Messumformer in die Messsonde integriert werden. Beispielsweise wird der Messumformer mittels einer applikationsspezifischen integrierten Schaltung (ASIC) realisiert, die wenigstens einen Analog-/Digital Wandler, einen Speicherbaustein und einen Prozessor aufweist.

Ein Speichermodul, das der Aufnahme von einer Messsonde zugeordneten Daten dient, kann auch in beliebigen Einheiten der Steuervorrichtung bzw. des Prozessleitsystems, vorzugsweise in einem zugeordneten Messumformer angeordnet oder lösbar damit verbunden oder gekoppelt sein. Dabei kann es sich um einen fest eingebauten oder einen mobilen Speicher bzw. Datenträger handeln. Möglich ist beispielsweise die Verwendung eines einer oder mehreren Messsonden zugeordneten portablen Speicherschlüssels (Memory Key), der mit einer Schnittstelle, beispielsweise einer USB (Universal Serial Bus) des Leitrechners verbunden ist.

Durch die Verwendung eines in der Messsonde angeordneten oder eines ausserhalb der Messsonde vorgesehenen portablen Speichermoduls resultieren eine vereinfachte Verwaltung und eine erhöhte Portabilität der Messsonden. In den Messsonden werden die für deren Verwaltung und Betrieb relevanten Werte, beispielsweise durch den Hersteller, vorzugsweise vor Inbetriebnahme gespeichert. Die gespeicherten Werte können von der Anlagensteuerung abgefragt und während des Betriebs geändert werden. Die wesentlichen Teile der Verwaltung der Messsonden werden daher ausgelagert, so dass ein vereinfachter Betrieb der Anlage möglich ist. Messsonden können zudem ausgetauscht werden, wonach die Zustandsdaten der neu eingesetzten Messsonden automatisch übernommen und weitergeführt werden. Nebst der höheren Portabilität der Messsonden resultiert daher eine höhere Modularität der Anlage.

Ebenso wie die Daten der Messsonden können auch das oder die der Durchführung des Verfahrens dienenden Betriebsprogramme zentral oder dezentral in der Anlagensteuerung, beispielsweise im Leitrechner oder in den Messumformern, vorgesehen werden.

Das erfindungsgemässe Verfahren erlaubt ferner nicht nur die Detektion einzelner Prozesse, z.B. CIP- oder SIP-Prozesse, sondern auch deren Überwachung. Vorzugsweise wird nach Überschreiten des Schwellwerts bzw. nach Detektion eines entsprechenden Prozesses ein der korrekten Durchführung des betreffenden Prozesses zugeordnetes Zeitintervall vorgegeben, innerhalb dessen der Schwellwert nicht unterschritten werden soll. Sofern der Schwellwert innerhalb des Zeitintervalls dennoch unterschritten wird, kann eine entsprechende Fehlermeldung abgegeben werden.

Nachfolgend wird die Erfindung anhand von Zeichnungen näher erläutert. Dabei zeigt:
- Figur 1: eine einstufige, nach dem erfindungsgemässen Verfahren arbeitende Anlage mit einem Behältnis 8; 81, 82 und drei darin integrierten Messsonden 1a, 1b, 1c, die über Messumformer 2a, 2b, einen Segmentkoppler 3 und ein Bussystem 4 mit einem Leitrechner 5 verbunden sind,
- Figur 2: in schematischer Darstellung eine bekannte Messsonde 1 mit einem in einem Innenrohr 11 und einer Glasmembran 111 in einem Innenpuffer 14 gelagerten Ableitelement 16 und einem getrennt davon innerhalb eines Aussenrohrs 12 in einem Aussenpuffer 13 gelagerten Bezugselement 15,
- Figur 3: die Messsonde 1 von Figur 2 mit einem Speichermodul 18, in dem Daten der Messsonde 1 speicherbar sind, und
- Figur 4: verschiedene innerhalb der Anlage von Figur 1 auftretende Signalverläufe.

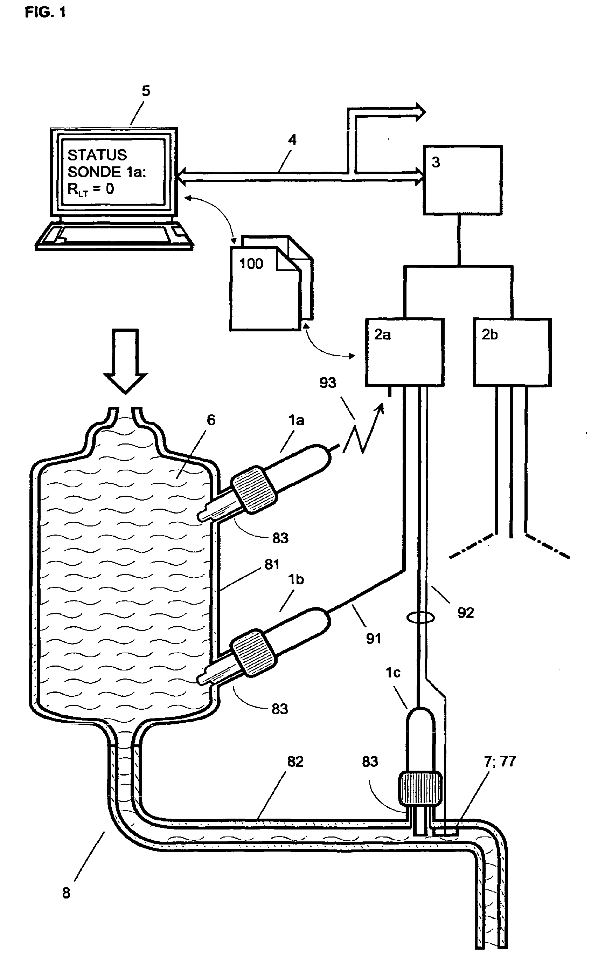

Figur 1 zeigt eine nach dem erfindungsgemässen Verfahren arbeitende ein- oder mehrstufige Anlage mit einem Behältnis 8 bestehend aus einem mit einem Prozessgut 6 gefüllten Behälter 81 einer Prozessstufe, der mittels eines Verbindungsrohrs 82 gegebenenfalls mit einer Anlageneinheit einer nächsten Prozessstufe verbunden ist (siehe beispielsweise die in [1] beschriebenen Braustufen). Die Eigenschaften des Prozessguts 6 werden mittels Messsonden 1a, 1b, 1c, gemessen, die über Anschlussleitungen und/oder Funkverbindungen 91, 92, 93; Messumformer 2a, 2b; einen Segmentkoppler 3 und ein Bussystem 4 mit einem Leitrechner 5 verbunden sind. Die Messsonden 1a, 1b 1c werden vorzugsweise mittels Prozessanschlüssen und Einbauarmaturen 83 an das Behältnis 8 angeschlossen, wie sie in [1] und [7], Die InFit® CIP-Serie: hygienisches Design - für höchste Ansprüche, Firmenschrift der Mettler-Toledo GmbH, CH-8902 Urdorf, Art. Nr. 52 400 526, Druckdatum 05/1999, beschrieben sind. In [7] sind ferner Messsonden, pH-Einstabmessketten, O₂-Sensoren, Leitfähigkeitsmesszellen und Trübungssensoren, gezeigt, die mit diesen Armaturen verwendbar sind. Möglich ist ferner die Verwendung weiterer Messsonden, wie CO₂-Sensoren.

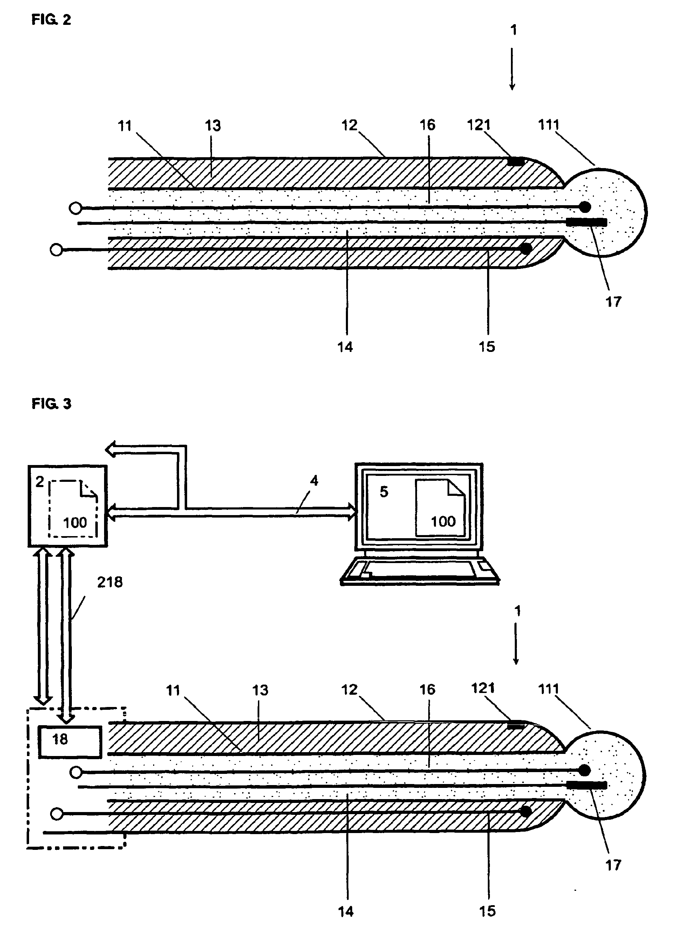

Der prinzipielle Aufbau der pH-Elektroden, die beispielsweise als Einstabmessketten eine Glaselektrode und eine Vergleichselektrode umfassen, ist nachstehend in Figur 2 gezeigt. In der Messsonde 1 sind die mit einem Ableitelement 16 versehene Glaselektrode und die mit einem Bezugselement 15 versehene Vergleichselektrode konstruktiv zusammengebaut. Das Ableitelement 16 ist in einer ersten Kammer innerhalb eines Innenrohrs 11 und einer daran anschliessenden dünnwandigen Glashalbkugel bzw. Glasmembran 111 in eine Lösung mit definiertem pH-Wert bzw. einen Innenpuffer 14 getaucht, der die leitfähige Verbindung zwischen der Innenseite der Glasmembran 111 und den Ableitelement 16 herstellt. Das Spannungspotential, das während der Messung am Ableitelement 16 entsteht, wird mit dem Spannungspotential an einem Bezugselement 15 verglichen, das innerhalb eines Aussenrohrs 12 in einen Elektrolyten bzw. einen Aussenpuffer 13 eingetaucht ist, der durch eine poröse Trennwand bzw. ein Diaphragma 121 langsam in das Messgut diffundiert.

Im Innenpufferraum ist ein Temperaturmessfühler 17 angeordnet, mittels dessen die Durchführung einer automatischen Kompensation von Temperatureinflüssen realisierbar ist. Wie in [8], Produktblatt "InPro 2000 pH-Elektroden mit Flüssigelektrolyt und integriertem Temperaturfühler" der Mettler-Toledo GmbH, CH-8902 Urdorf, Druckdatum 10/2000 beschrieben, bietet die Positionierung des Temperaturmessfühlers unmittelbar hinter dem pH-sensitiven Glas der Glasmembran 111 den Vorteil eines schnellen Ansprechverhaltens mit hoher Genauigkeit des Temperatursignals, und somit auch des temperaturkompensierten pH-Signals.

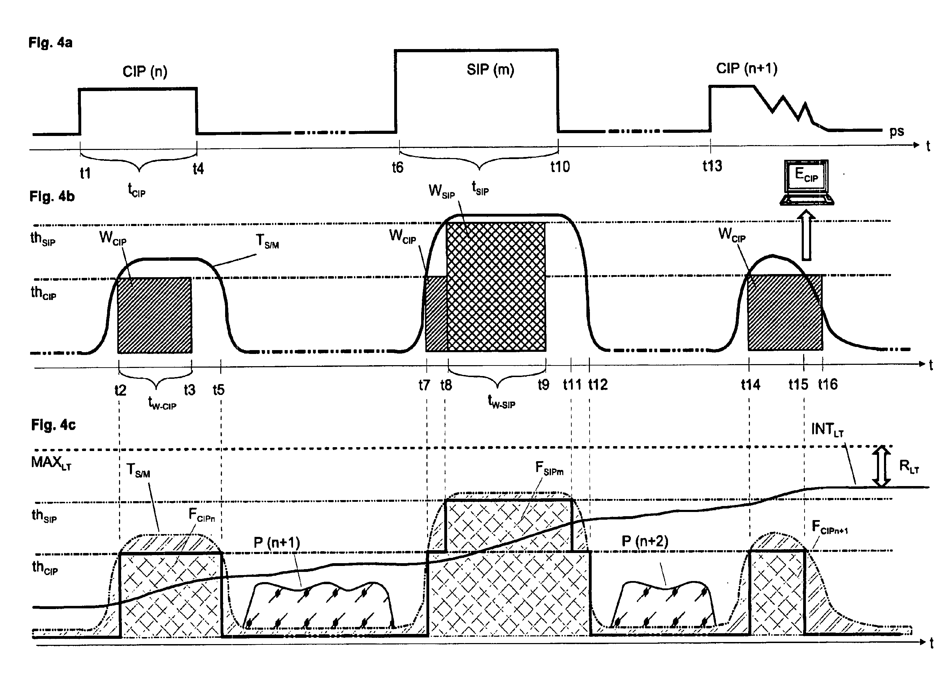

Der in der Messonde 1 integrierte Temperaturmessfühler 17 kann vorteilhaft zur Durchführung des erfindungsgemässen Verfahrens verwendet werden, das nachstehend anhand von Figur 4 beschrieben wird. Ferner ist das Verfahren mittels eines ausserhalb der Messsonde angeordneten Temperaturfühlers 7 (siehe Figur 1) durchführbar, der die Temperatur des Prozessguts oder einer Reinigungsflüssigkeit misst, die die zu überwachende Messsonde 1 umgibt, gegebenenfalls umfliesst. Der Temperaturfühler 7 kann dazu in einem Prozessanschluss oder einer der Installation der Messsonde 1a, dienenden Armatur 83 integriert und drahtlos oder drahtgebunden über eine Leitung 92 mit der Prozesssteuerung, vorzugsweise dem Messumformer 2a verbunden sein. Verfahren zur drahtlosen Kommunikation zwischen Einheiten eines Systems bzw. eines Netzwerks sind beispielsweise in [10], U.S. Offenlegungsschrift US 2002/0120750 A1 beschrieben.

Figur 4a zeigt den Signalverlauf eines Steuersignals ps, mittels dessen CIP- oder SIP-Prozesse ausgelöst werden. Zum Zeitpunkt t1 wird ein CIP-Prozess ausgelöst, der nach der Prozessdauer t_{CIP} zum Zeitpunkt t4 beendet wird.

Figur 4b zeigt den Verlauf der Temperatur T_{S/M} einer überwachten Messonde 1a; oder des diese Messsonde 1a; ... umfliessenden Mediums 6, beispielsweise einer Reinigungsflüssigkeit oder eines zu verwertenden Prozessguts. Dabei ist ersichtlich, dass die Temperatur T_{S/M} nach dem Zeitpunkt t1 zeitlich leicht verzögert ansteigt und zum Zeitpunkt t2 einen dem CIP-Prozess zugeordneten Schwellwert th_{CIP} überschreitet und diesen nach dem Zeitpunkt t5 wieder unterschreitet.

Der registrierte Verlauf der Temperatur T_{S/M} wird erfindungsgemäss wie folgt ausgewertet:

Einerseits wird durch das alleinige Überschreiten des dem CIP-Prozess zugeordneten Schwellwerts th_{CIP} festgestellt, dass ein CIP-Prozess ausgelöst wurde, der auf die Messsonde 1a; ... eingewirkt hat. Die Restlebensdauer R_{LT} bzw. die zulässige Restbelastung (einfachheitshalber wird nachstehend nur noch die Restlebensdauer R_{LT} genannt) kann daher um einen bestimmten Wert reduziert werden. Nach einer bestimmten Anzahl detektierter CIP-Prozesse kann daher festgestellt und gemeldet werden, wann die Restlebensdauer R_{LT} bei Null angelangt sein wird.

Der tatsächliche Verlauf der Restlebensdauer R_{LT} kann noch präziser festgestellt werden, wenn für jeden CIP-Prozess noch dessen Dauer berücksichtigt wird, die vorzugsweise durch Registrierung des Zeitpunkts t2 des Überschreitens und des folgenden Zeitpunkts t5 des Unterschreitens des betreffenden

Schwellwerts th_{CIP} ermittelt wird. Die Restlebensdauer R_{LT} wird daher anhand der Integration bzw. Summation der Zeitabschnitte t5-t2 ermittelt, während der die Temperatur T_{S/M} der Messsonde 1 über dem Schwellwert th_{CIP} liegt.

Nebst der kumulierten Zeitdauer der CIP- oder SIP-Prozesse wird vorzugsweise noch die Anzahl der CIP- und SIP-Prozesse berücksichtigt, da sich die aufgetretenen Belastungen bei gleichem Summationswert aufgrund der unterschiedlichen Anzahl der Prozessintervalle deutlich unterscheiden können. Sofern eine hohe Anzahl von Temperaturgradienten bzw. Durchschreitungen des Schwellwerts th_{CIP} aufgetreten ist, ist normalerweise von einer höheren Belastung der Messsonde 1a; ... auszugehen.

Bei SIP-Prozessen, bei denen in der Regel höhere Temperaturen auftreten als bei CIP-Prozessen, ist mit einer höheren Belastung für die Sonde zu rechnen. Dabei ist es möglich, dass in einer Anlage nur CIP- oder nur SIP-Prozesse gefahren werden. Möglich ist jedoch, dass nach einer Anzahl CIP-Prozesse auch ein SIP-Prozess gefahren wird. Die Wahl der Reinigungsprozesse CIP oder SIP ist dabei von dem zu verarbeitenden Prozessgut, den Qualitätsanforderungen und gegebenenfalls weiteren Prozessparametern abhängig. In Figur 4a ist beispielsweise gezeigt, dass nach dem CIP-Prozess n, zum Zeitpunkt t6, ein SIP-Prozess ausgelöst und nach der Zeitdauer t_{SIP}, zum Zeitpunkt t10, wieder beendet wird. Das Überschreiten eines dem SIP-Prozess zugeordneten Schwellwerts th_{SIP} wird zum Zeitpunkt t8 registriert, nachdem der dem CIP-Prozess zugeordnete Schwellwert th_{CIP} kurz zuvor, zum Zeitpunkt t7, überschritten wurde. Das Mass der Belastung der einzelnen Prozesse bzw. die zu registrierende Reduktion der Restlebensdauer R_{LT} wird beispielsweise durch den Hersteller in Laborversuchen bestimmt und als Belastungskennwert oder Parametergruppe vorgegeben. Dabei kann jeweils ein Gewichtungsfaktor einem Überschreiten eines jeweiligen Schwellwerts th_{CIP} beziehungsweise th_{SIP} zugeordnet werden, um dem überproportionalen Einfluss hoher Temperaturen auf die Belastung der Messsonde 1a; ... und demzufolge auf deren Restlebensdauer R_{LT} gerecht zu werden.

Es ist ferner möglich, die Belastung der Messsonde 1a; ... über die gesamte Einsatzdauer zu ermitteln. Dabei wird der Verlauf der Temperatur T_{S/M} der Messsonde 1 über die gesamte Betriebsdauer integriert, so dass nicht nur die Belastungen von CIP- und/oder SIP-Prozessen, sondern auch die durch Produktionsprozesse verursachten Belastungen präzise berücksichtigt werden. Der Verlauf der Integralwerte INT_{LT} berücksichtigt daher auch Temperatureinflüsse die durch Produktionsprozesse P(n+1), P(n+2) verursacht wurden. Es ist daher möglich, weitere Schwellwerte einzuführen, anhand derer Produktionsprozesse oder zumindest Belastungen der Messsonde 1 festgestellt und berücksichtigt werden können. Das Prozessgut bildet daher während der Produktionsprozesse und das Reinigunsgut (Dampf oder Flüssigkeit) bildet während der Reinigungsprozesse das Medium 6, mittels dessen einerseits die Belastung zur Messsonde 1a, ... und andererseits die zugehörige Information betreffend die aufgetretene Belastung an den Temperaturfühler 7; 17 übertragen werden.

Aus Figur 4c ist ersichtlich, dass sich der Verlauf der Integralwerte INT_{LT} als Funktion der Zeit stetig einem Maximalwert MAX_{LT} annähert. Die Differenz des Maximalwerts MAX_{LT} und des jeweiligen Integralwerte INT_{LT} ergibt die Restlebensdauer R_{LT} (R_{LT} = MAX_{LT} - INT_{LT}) der betreffenden Messonde 1a, ... .

Die berechnete Restlebensdauer R_{LT} oder erst deren Nulldurchgang kann für jede überwachte Messsonde 1a; ... an einer zentralen oder dezentralen Anzeigevorrichtung 2a, 5 der Anlage angezeigt werden.

Wie in Figur 3 gezeigt, weisen die Messsonden 1 in einer vorzugsweisen Ausgestaltung ein beispielsweise in den Glaskörper oder den Steckeraufsatz der Messsonde 1 integriertes Speichermodul 18 auf, in dem der Zustand der Messsonde 1; insbesondere der der Messsonde 1 zugeordnete Maximalwert MAX_{LT}, der registrierte Integralwert. INT_{LT} , der Belastungskennwert und/oder die Restlebensdauer R_{LT} speicherbar ist. Die Verwaltung der Messsonden einer Anlage wird dadurch vereinfacht. Alle für den Betrieb und die Überwachung der Messsonde 1 notwendigen Daten werden vorzugsweise im Speichermodul 18 gespeichert, so dass die Messsonde 1 ohne weiteren Verwaltungsaufwand an die Anlagensteuerung bzw. an einen Messumformer oder Transmitter 2a; 2b; ... angeschlossen und in Betrieb genommen werden kann. Die mit dem Speichermodul 18 versehene Messsonde 1 kann daher auch Inbetriebnahme problemlos von einem ersten zu einem zweiten Einsatzort transferiert werden. Als Speichermodul 18 ist beispielsweise ein EEPROM-Modul (Electrically Erasable Programmable Read Only Memory) verwendbar, wie es in [9], U. Tietze, Ch. Schenk, Halbleiterschaltungstechnik, 11. Auflage, 1. Nachdruck, Springer Verlag, Berlin 1999, Seiten 751-752, beschrieben ist. In weiteren vorzugsweisen Ausgestaltungen kann auch der zugehörige Messumformer 2 in die Messsonde 1 integriert werden.

Das erfindungsgemässe verfahren erlaubt ferner die Überwachung der detektierten Prozesse, z.B. der CIP- oder SIP-Prozesse. Beispielsweise wird nach Überschreiten eines Schwellwerts th_{CIP} bzw. th_{SIP} bzw, nach Detektion des entsprechenden Prozesses CIP, SIP ein der korrekten Durchführung des betreffenden Prozesses CIP, SIP zugeordnetes Zeitintervall t_{W-CIP} bzw t_{W-SIP} vorgegeben, innerhalb dessen der Schwellwert th_{CIP} bzw. th_{SIP} nicht unterschritten werden soll. Sofern der Schwellwert th_{CIP} bzw. th_{SIP} innerhalb des Zeitintervalls t_{W-CIP} bzw. t_{W-SIP} unterschritten wird, kann daher eine entsprechende Fehlermeldung abgegeben werden. Die entsprechenden Überwachungsfenster W_{CIP} bzw. W_{SIP}, die nach Überschreiten des Schwellwerts th_{CIP} bzw. th_{SIP} geöffnet werden, sind in Figur 4b eingetragen. In Figur 4b ist gezeigt, dass bei der Durchführung eines SIP-Prozesses bei Überschreiten des unteren Schwellwerts th_{CIP} zuerst ein Überwachungsfenster W_{CIP} geöffnet wird, das nach Überschreiten des oberen Schwellwerts th_{SIP} durch das entsprechende Überwachungsfenster W_{SIP} überschrieben wird.

In den Figuren 4a und 4b ist gezeigt, dass bei der Durchführung des CIP-Prozesses n+1 Fehler auftreten, so dass das Überwachungsfenster W_{CIP} durchlaufen und ein Fehler E_{ClP} gemeldet wird. Sofern während der Durchführung eines SIP-Prozesses das zugehörige Überwachungsfenster W_{SIP} durchlaufen wird, erfolgt ebenfalls eine entsprechende Fehlermeldung.

Das erfindungsgemässe Verfahren wurde in bevorzugten Ausgestaltungen beschrieben und dargestellt. Anhand der erfindungsgemässen Lehre sind jedoch weitere fachmännische Ausgestaltungen realisierbar. Insbesondere können zur Identifikation der einzelnen Prozesse CIP, SIP weitere Parameter verwendet werden. Beispielsweise kann durch Messung des im Behältnis auftretenden Drucks zwischen CIP-Prozessen unterschieden werden, in denen Flüssigkeiten oder Dampf verwendet wird. Die Anlage oder die Messsonden werden daher vorzugsweise durch einen Drucksensor 77 (siehe Figur 1) ergänzt. Verfahren zur Druckmessung und Drucksensoren sind in [9], Seiten 1241 bis 1251 beschrieben. Die mit dem Speichermodul 18 versehene Messsonde 1 kann ferner zur Speicherung weiterer Daten verwendet werden.

Das erfindungsgemässe Verfahren kann mittels zentralisierten und/oder dezentralisierten Teilen der Steuervorrichtung, mit dem Leitrechner 5 und/oder den Messumformern bzw. Transmittern 2a, ... durchgeführt werden, die dazu mit den entsprechenden Betriebsprogrammen 100 (siehe Figur 1) versehen sind. Beispielsweise kann der Zustand der Messsonden 1 ausschliesslich auf dem Leitrechner 5 oder auf den Messumformern bzw. Transmittern 2a, ... angezeigt werden. Möglich ist jedoch auch eine Aufgabenteilung zwischen den verschiedenen Ebenen der Prozesssteuerung. Durch fachmännische Massnahmen kann das erfindungsgemässe Verfahren somit auf beliebigen ein- oder mehrstufigen Anlagen mit geringem Aufwand implementiert werden.

### Literaturverzeichnis

[1] Prozessanalytische Systemlösungen für die Brauerei, Firmenschrift der Mettler-Toledo GmbH, CH-8902 Urdorf, Art. Nr. 52 900 309, Druckdatum 09/2003
[2] Dr.-Ing. Karl Welchner, Oberstes Gebot, Reproduzierbare Anlagenreinigung als zentrales Qualitätskriterium (Teil 1) Pharma + Food 2/2000
[3] DE 102 09 318 A1
[4] DE 101 00 239 A1
[5] DE 101 41 408 A1
[6] Jochen Endress, Non-Stopp im Einsatz, Pharma + Food 1/2002
[7] Die InFit® CIP-Serie: hygienisches Design - für höchste Ansprüche, Firmenschrift der Mettler-Toledo GmbH, CH-8902 Urdorf, Art. Nr. 52 400 526, Druckdatum 05/1999
[8] Produktblatt "InPro 2000 pH-Elektroden mit Flüssigelektrolyt und integriertem Temperaturfühler" der Mettler-Toledo GmbH, CH-8902 Urdorf, Druckdatum 10/2000
[9] U. Tietze, Ch. Schenk, Halbleiterschaltungstechnik, 11. Auflage, 1. Nachdruck, Springer Verlag, Berlin 1999
[10] U.S. Offenlegungsschrift US 2002/0120750 A1
[11] "The new O₂ range of sensors," der Mettler-Toledo GmbH, Pharmaceutical News, Bd. 1, Januar 2003, S. 1-8

### Bezugszeichenliste

- 1, 1a, ...: Messsonden
- 11: Innenrohr
- 111: Glasmembran
- 12: Aussenrohr
- 121: Diaphragma
- 13: Innenpuffer
- 14: Aussenpuffer
- 15: Bezugselement
- 16: Ableitelement
- 17: Temperaturfühler
- 18: Speichermodul
- 2a, 2b: Messumformer bzw. Transmitter
- 218: Verbindungsleitung zum Speichermodul 18
- 3: Segmentkoppler
- 4: Bussystem
- 5: Zentrale Steuerung, Leitrechner
- 6: Medium
- 7: externer Temperaturmessfühler
- 77: Drucksensor
- 8: Behältnis
- 81: Tank
- 82: Rohr
- 83: Armatur
- 91: Anschlussleitungen der Messsonden 1a, 1b, ...
- 92: Anschlussleitung des externen Temperaturmessfühlers
- 93: Funkverbindung
- 100: Betriebsprogramm

## Patentansprüche

1. Verfahren zur Bestimmung des Zustands wenigstens einer in einem Behältnis (8; 81, 82) integrierten Messsonde (1a; 1b ...), die, ohne diese auszubauen, von Zeit zu Zeit, insbesondere unter Anwendung bekannter CIP- oder SIP-Verfahren, gereinigt wird, wobei die Temperatur (T_{S/M}) der Messsonde (1a; 1b ...) oder des die Messsonde umgebenden Mediums (6) mittels eines innerhalb der Messsonde (1a; 1b; ...) oder innerhalb des Behältnisses (8; 81, 82) vorgesehenen Messfühlers (17; 7) gemessen wird, **dadurch gekennzeichnet, dass** anhand des nach Einbau der Messsonde (1a; 1b; ...) registrierten Verlaufs der gemessenen Temperatur (T_{S/M}) der Zustand der Messsonde (1a; 1b; ...) bestimmt wird.

2. Verfahren nach Anspruch 1, **dadurch gekennzeichnet, dass** die Temperatur (T_{S/M}) mit wenigstens einem Schwellwert (th_{CIP}; th_{SIP}) verglichen und nach Überschreiten dieses Schwellwerts
a) eine entsprechende Belastung registriert;
b) eine entsprechende Belastung registriert und die Summe aller Belastungen (INT_{LT}) berechnet oder
c) eine entsprechende Belastung registriert und die Summe aller Belastungen (INT_{LT}) berechnet und durch Vergleich mit einem Maximalwert (MAX_{LT}) der zulässigen Belastungen eine zulässige Restbelastung oder Restlebensdauer (R_{LT}) berechnet wird.

3. Verfahren nach Anspruch 2, **dadurch gekennzeichnet, dass** die zulässige Restbelastung oder Restlebensdauer (R_{LT}) der Messsonde (1a; 1b; ...) entsprechend dem überschrittenen Schwellwert (th_{CIP}; th_{SIP}), der einem in der Anlage laufenden Prozess, insbesondere einem Reinigungs- oder Sterilisationsprozess, CIP bzw. SIP, oder einem Produktionsprozess zugeordnet ist, reduziert wird.

4. Verfahren nach Anspruch 1, 2 oder 3, **dadurch gekennzeichnet, dass** die Summe aller Belastungen (INT_{LT}), die auf die Messsonde (1a; 1b; ...) einwirken, durch Integration
a) des gesamten Verlaufs der Temperatur (T_{S/M}) oder
b) des Verlaufs der Temperatur (T_{S/M}) nach Überschreiten eines Schwellwerts (th_{CIP}; th_{SIP}) oder
c) der Zeitabschnitte ((t5-t2), (t12-t7), (t15-t14)), während derer die Temperatur (T_{S/M}) über dem bzw. den Schwellwerten (th_{CIP}; th_{SIP}) liegt;
bestimmt wird und dass nach Überschreiten des Maximalwerts (MAX_{LT}) der Zustand der Messsonde (1a; 1b; ...) bzw, das Überschreiten des Maximalwerts (MAX_{LT}) gemeldet wird.

5. Verfahren nach einem der Ansprüche 1 bis 4, **dadurch gekennzeichnet, dass** die Verwaltungs- und/oder Betriebsdaten der Messsonde (1a; 1b; ...), insbesondere die Restbelastung oder die Restlebensdauer (R_{LT}), die Gesamtbelastung (INT_{LT}), ein Belastungskennwert, der Maximalwert (MAX_{LT}) und/oder Identifikationsdaten, in ein in der Messsonde (1a; 1b; ...) vorgesehenes Speichermodul (18) oder in einen ausserhalb der Messsonde (1a; 1b; ...) vorgesehenen festen oder portablen Datenträger gespeichert werden.

6. Verfahren nach einem der Ansprüche 2 bis 5, **dadurch gekennzeichnet, dass** durch eine Prozesssteuerung (2, 5) nach Überschreiten eines Schwellwerts (th_{CIP}; th_{SIP}) die Durchführung eines diesem Schwellwert (th_{CIP}; th_{SIP}) zugeordneten Prozesses (CIP; SIP) überwacht wird.

7. Verfahren nach Anspruch 6, **dadurch gekennzeichnet, dass** nach Überschreiten des Schwellwerts (th_{CIP}; th_{SIP}) ein der korrekten Durchführung des betreffenden Prozesses (CIP; SIP) zugeordnetes Zeitintervall (t_{CIP}; t_{SIP}) vorgegeben wird, innerhalb dessen der Schwellwert (th_{CIP}; th_{SIP}) nicht unterschritten werden soll, wobei nach Unterschreiten des Schwellwerts (th_{CIP}; th_{SIP}) innerhalb des Zeitintervalls (t_{CIP}; t_{SIP}) ein Fehler (E_{CIP}; E_{SIP}) gemeldet wird.

8. Anlage zur Durchführung des Verfahrens nach einem der Ansprüche 1 bis 7 mit einem Behältnis (8; 81, 82) und wenigstens einer darin integrierten Messsonde (1a; 1b; ...), die, ohne diese auszubauen, von Zeit zu Zeit, insbesondere unter Anwendung bekannter CIP- oder SIP-Verfahren, gereinigt oder sterilisiert wird, wobei mindestens ein Messfühler (7, 17) vorgesehen ist, mittels dessen die Temperatur (T_{s/M}) der Messsonde (1a; 1b; ...) oder des die Messsonde (1a; 1b; ...) umgebenden Mediums (6) messbar ist, und eine Steuervorrichtung (2a, 5), mittels derer während der Verwendung der Messsonde (1a; 1b; ...), der Verlauf der gemessenen Temperatur (T_{S/M}) registrierbar und der Zustand der Messsonde (1a; 1b; ...) bestimmbar ist, **dadurch gekennzeichnet, dass** wenigstens ein der Durchführung des Verfahrens dienendes Betriebsprogramm (100) in der Steuervorrichtung (2a; 5) vorgesehen ist, die drahtlos oder drahtgebunden mit der Messsonde (1a; 1b; ...) und/oder dem innerhalb oder ausserhalb der Messsonde (1a; 1b; ...) angeordneten Messfühler (7; 17) verbunden ist.

9. Anlage nach Anspruch 8, **dadurch gekennzeichnet, dass** der Messfühler zur Messung der Temperatur (T_{s/M}) innerhalb der Messsonde (1a; 1b; ...) oder innerhalb des Behältnisses (8; 81, 82), gegebenenfalls innerhalb einer der Montage der Messsonde (1a; 1b; ...) dienenden Armatur (83) vorgesehen ist.

10. Anlage nach Anspruch 8 oder 9, **dadurch gekennzeichnet, dass** die Messsonde (1a; 1b; ...), die insbesondere zur Messung der Leitfähigkeit, des pH-Werts, der Trübung, des Sauerstoffgehalts oder des CO₂-Gehalts des Mediums (6) dient, ein Speichermodul (18) aufweist, in dem die für den Betrieb und die Überwachung der Messsonde (1a; 1b; ...) notwendigen Daten, insbesondere die Restlebensdauer (R_{LT}), der Integralwert (INT_{LT}), der Belastungskennwert, der Maximalwert (MAX_{LT}) und Identifikationsdaten, gespeichert sind.

11. Anlage nach Anspruch 9, oder 10, **dadurch gekennzeichnet, dass** Messsonden (1a; 1b; ...) vorgesehen sind, in denen ein Messumformer (2) integriert ist.

12. Anlage nach einem der Ansprüche 8 bis 11, **dadurch gekennzeichnet, dass** ein Drucksensor (77) zur Messung des im Behältnis auftretenden Drucks vorhanden ist.

## Claims

1. Method for determining the condition of at least one measuring probe (1a; 1b; ...) which is integrated in a process vessel (8; 81, 82) and which is cleaned from time to time by using known CIP- and SIP processes without uninstalling the measuring probe (1a; 1b; ...), whereinthe temperature (I_{S/M}) of the measuring probe (1a; 1b; ...) or of the medium (6) surrounding the measuring probe is measured by means of a measuring sensor (17) arranged inside the measuring probe (1a; 1b; ...) or inside the process vessel (8; 81, 82), **characterized in that** the condition of the measuring probe (1a; 1b; ...) is determined based on the record of the temperature (T_{S/M}) measured over time after the installation of the measuring probe (1a; 1b; ...).

2. Method according to claim 1, **characterized in that** the temperature (T_{S/M}) is compared to at least one threshold value (th_{CIP}; th_{SIP}) and that after said threshold value has been exceeded
a) a corresponding wear-generating load is registered;
b) a corresponding wear-generating load is registered, and the cumulative sum (INT_{LT}) of all wear-generating loads is calculated; or
c) a corresponding wear-generating load is registered, the cumulative sum (INT_{LT}) of all wear-generating loads is calculated, and by comparing the sum (INT_{LT}) to a maximum value (MAX_{LT}) for the allowable cumulative load, a remaining allowable load or remaining operating lifetime (R_{LT}) is determined.

3. Method according to claim 2, **characterized in that** the remaining allowable load or remaining operating lifetime (R_{LT}) of the measuring probe (1a; 1b; ...) is reduced by an amount corresponding to the threshold (th_{CIP}, th_{SIP}) which is assigned to a process performed by the process system, in particular a cleaning process CIP or a sterilizing process SIP, or a production process.

4. Method according to claim 1, 2 or 3, **characterized in that** the sum (INT_{LT}) of all wear-generating loads to which the measuring probe (1a; 1b; ...) is exposed is determined by integrating
a) the recorded temperature (T_{S/M}) over the entire time span, or
b) the recorded temperature (T_{S/M}) from the time when a threshold value (th_{CIP}; th_{SIP}) was exceeded, or
c) the recorded temperature (T_{S/M}) over the time segments (t5-t2), (t12-t7), (t15-t14) during which the temperature (T_{S/M}) exceeds the respective threshold values (th_{CIP}, th_{SIP}),
and that when the maximum value (MAX_{LT}) has been exceeded, the condition of the measuring probe (1a; 1b ...) or the fact that the maximum value (MAX_{LT}) has been exceeded is reported.

5. Method according to one of the claims 1 to 4, **characterized in that** the data concerning the administration and/or operation of the measuring probe (1a; 1b; ...), in particular the allowable remaining load or the remaining operating lifetime (R_{LT}), the cumulative load (INT_{LT}), a characteristic wear parameter, the maximum value (MAX_{LT}) and/or identification data, are stored in a memory module (18) contained inside the measuring probe (1a; 1b; ...) or on a fixed or portable data carrier arranged outside the measuring probe (1a; 1b; ...).

6. Method according to one of the claims 2 to 5, **characterized in that** after a threshold value (th_{CIP}; th_{SIP}) has been exceeded, a process control device (2, 5) monitors the execution of a process (CIP; SIP) associated with the respective threshold value (th_{CIP}; th_{SIP}) .

7. Method according to claim 6, **characterized in that** after a threshold value (th_{CIP}; th_{SIP}) has been exceeded, a time interval (t_{CIP}, t_{SIP}) is set which corresponds to a correct execution of the respective process (CIP; SIP), where within said time interval (t_{CIP}, t_{SIP}) the temperature (T_{S/M}) should not fall below the threshold value (th_{CIP}; th_{SIP}), but if said temperature (T_{S/M}) nevertheless falls below the threshold value within said time interval (t_{CIP}, t_{SIP}), an error message (E_{CIP}; E_{SIP}) is generated.

8. Process system adapted for executing the method according to one of the claims 1 to 7, with a process vessel (8; 81, 82) and at least one measuring probe (1a; 1b; ...), which measuring probe is integrated in the process vessel (8; 81, 82) and is cleaned or sterilized from time to time by using known CIP- and SIP processes without uninstalling the measuring probe (1a; 1b; ...), said process system comprising at least one measuring sensor (7, 17,) operable to measure the temperature (T_{S/M}) of the measuring probe (1a; 1b; ...) or of the medium (6) surrounding the measuring probe (1a; 1b; ...) and a control device (2a, 5) operable to register the record of the temperature (T_{S/M}) measured over time during the use of the measuring probe (1a; 1b; ...) and to determine the condition of the measuring probe (1a; 1b; ...), **characterized in that** at least one operating program (100) is provided in the control device (2a, 5), said control device (2a, 5) being connected by way of a wireless or wire-based arrangement to the measuring probe (1a; 1b; ...) and/or to the measuring sensor (7; 17) that is arranged either inside or outside of the measuring probes (1a; 1b; ...).

9. Process system according to claim 8, **characterized in that** the temperature (T_{S/M}) can be measured by means of a measurement sensor (17; 7) which is arranged inside the measuring probe (1a; 1b; ...) or inside the process vessel (8; 81, 82) or, if applicable, inside an armature (83) serving as an installation mount for the measuring probe (1a; 1b; ...).

10. Process system according to claim 8 or 9, **characterized in that** the measuring probe (1a; 1b; ...), which serves in particular for the measurement of the conductivity, the pH value, the turbidity, the oxygen content or the CO₂ content of the medium (6), includes a memory module (18) in which the data required for the operation and monitoring the measuring probe (1a; 1b; ...) are stored, in particular the remaining operating lifetime (R_{LT}), the integral value (INT_{LT}), the characteristic wear parameter, the maximum value (MAX_{LT}), and/or identification data.

11. Process system according to claim 9 or 10, **characterized in that** measuring probes (1a; 1b; ...) are provided in which a memory module (18) and/or a measurement converter (2) is integrated.

12. Process system according to one of the claims 8 to 11, **characterized in that** a pressure sensor (77) is provided for the measurement of the pressure inside the process vessel.

## Revendications

1. Procédé pour déterminer l'état d'au moins une sonde de mesure (1a ; 1b ; ...) intégrée dans un récipient (8 ; 81, 82), qui, sans démonter celle-ci, est nettoyée de temps en temps, en particulier avec l'application de procédés CIP ou SIP connus, la température (T_{S/M}) de la sonde de mesure (1a ; 1b ; ...) ou du fluide (6) entourant la sonde de mesure étant mesurée au moyen d'un capteur de mesure (17 ; 7) prévu à l'intérieur de la sonde de mesure (1a ; 1b ; ...) ou à l'intérieur du récipient (8 ; 81, 82), **caractérisé en ce que** l'état de la sonde de mesure (1a ; 1b; ...) est déterminé à l'aide de la courbe, enregistrée après le montage de la sonde de mesure (1a ; 1b; ...) de la température (_{TS/M}) mesurée.

2. Procédé selon la revendication 1, **caractérisé en ce que** la température (T_{S/M}) est comparée avec au moins une valeur seuil (th_{CIP} ; th_{SIP}) et après un dépassement de cette valeur seuil
a) une charge correspondante est enregistrée ;
b) une charge correspondante est enregistrée et la somme de toutes les charges (INT_{LT}) est calculée ou
c) une charge correspondante est enregistrée et la somme de toutes les charges (INT_{LT}) est calculée et une charge résiduelle autorisée ou une durée de vie résiduelle (R_{LT}) est calculée par comparaison avec une valeur maximale (MAX_{LT}) des charges autorisées.

3. Procédé selon la revendication 2, **caractérisé en ce que** la charge résiduelle autorisée ou la durée de vie résiduelle (R_{LT}) de la sonde de mesure (1a ; 1b ; ...) est réduite en fonction de la valeur seuil (th_{CIP} ; th_{SIP}) dépassée, qui est attribuée à un processus en cours dans l'installation, en particulier un processus de nettoyage ou un processus de stérilisation, CIP ou SIP, ou un processus de production.

4. Procédé selon la revendication 1, 2 ou 3, **caractérisé en ce que** la somme de toutes les charges (INT_{LT}), qui agissent sur la sonde de mesure (1a ; 1b ; ...) est déterminée par l'intégration
a) de l'ensemble de la courbe de la température (T_{S/M}) ou
b) de la courbe de la température (T_{S/M}) après le dépassement d'une valeur seuil (th_{CIP} ; th_{SIP}) ou
c) des périodes ((t5-t2), (t12-t7), (t15-t14)), pendant lesquelles la température (T_{S/M}) est supérieure à la ou aux valeurs seuil (th_{CIP} th_{SIP}) ;
et **en ce que**, après le dépassement de la valeur maximale (MAX_{LT}), l'état de la sonde de mesure (1a ; 1b ; ...) ou le dépassement de la valeur maximale (MAX_{LT}) est signalé.

5. Procédé selon l'une quelconque des revendications 1 à 4, **caractérisé en ce que** les données de gestion et/ou d'opération de la sonde de mesure (1a ; 1b ; ...), en particulier la charge résiduelle ou la durée de vie résiduelle (R_{LT}), la charge globale (INT_{LT}), une caractéristique de charge, la valeur maximale (MAX_{LT}) et/ou des données d'identification, sont stockées dans un module de mémoire (18) prévu dans la sonde de mesure (1a ; 1b ; ...) ou dans un support de données fixe ou portable prévu à l'extérieur de la sonde de mesure (1a ; 1b ; ...).

6. Procédé selon l'une quelconque des revendications 2 à 5, **caractérisé en ce que** la mise en oeuvre d'un processus (CIP ; SIP) attribué à cette valeur seuil (th_{CIP} ; th_{SIP}) est contrôlée par une commande de processus (2, 5) après le dépassement d'une valeur seuil (th_{CIP} ; th_{SIP}).

7. Procédé selon la revendication 6, **caractérisé en ce que**, après le dépassement de la valeur seuil (th_{CIP}; th_{SIP}), on prédéfinit un intervalle de temps (t_{CIP}; t_{SIP}) attribué à la mise en oeuvre correcte du processus concerné (CIP ; SIP), à l'intérieur duquel la valeur seuil (th_{CIP} ; th_{SIP}) doit être dépassée, sachant que, après le sous-dépassement de la valeur seuil (th_{CIP} ; th_{SIP}) à l'intérieur de l'intervalle de temps (t_{CIP} ; t_{SIP}), une erreur (E_{CIP} ; E_{SIP}) est signalée.

8. Installation pour la mise en oeuvre du procédé selon l'une quelconque des revendications 1 à 7 avec un récipient (8 ; 81, 82) et au moins une sonde de mesure (1a ; 1b ; ...) intégrée à l'intérieur, qui, sans démonter celle-ci, est nettoyée ou stérilisée, en particulier avec l'application de procédés CIP ou SIP connus, au moins un capteur de mesure (7, 17) étant prévu, au moyen duquel la température (T_{S/M}) de la sonde de mesure (1a ; 1b ; ...) ou du fluide (6) entourant la sonde de mesure (1a ; 1b ; ...) peut être mesurée, et un dispositif de commande (2a, 5) au moyen duquel la courbe de la température (T_{S/M}) mesurée peut être enregistrée pendant l'utilisation de la sonde de mesure (1a ; 1b; ...) et l'état de la sonde de mesure (1a ; 1b ; ...) peut être déterminé, **caractérisée en ce qu'**au moins un programme de service (100) servant à la mise oeuvre du procédé est prévu dans le dispositif de commande (2a ; 5), qui est relié sans fil ou avec fil à la sonde de mesure (1a ; 1b ; ...) et/ou au capteur de mesure (7 ; 17) disposé à l'intérieur ou à l'extérieur de la sonde de mesure (1a ; 1b ; ...).

9. Installation selon la revendication 8, **caractérisée en ce que** le capteur de mesure pour mesurer la température (T_{S/M}) est disposé à l'intérieur de la sonde de mesure (1a ; 1b ; ...) ou à l'intérieur du récipient (8 ; 81, 82), éventuellement à l'intérieur d'un accessoire (83) servant au montage de la sonde de mesure (1a ; 1b ; ...).

10. Installation selon la revendication 8 ou 9, **caractérisée en ce que** la sonde de mesure (1a ; 1b ; ...), qui sert en particulier à la mesure de la conductibilité, du pH, de la turbidité, de la teneur en oxygène ou de la teneur en CO₂ du fluide (6), présente un module de mémoire (18), dans lequel les données nécessaires pour l'exploitation et le contrôle de la sonde de mesure (1a ; 1b ; ...), en particulier la durée de vie résiduelle (R_{LT}), la valeur intégrale (INT_{LT}), la valeur caractéristique de charge, la valeur maximale (MAX_{LT}) et les données d'identification sont stockées.

11. Installation selon la revendication 9 ou 10, **caractérisée en ce que** des sondes de mesure (1a ; 1b ; ...) sont prévues, dans lesquelles est intégré un convertisseur de mesure (2).

12. Installation selon l'une quelconque des revendications 8 à 11, **caractérisée en ce qu'**un capteur de pression (77) est présent pour la mesure de la pression apparaissant dans le récipient.
